# EUROPEAN PATENT APPLICATION

(11) **EP 4 428 079 A1**
(43) Date of publication of application: **11.09.2024**
(21) Application number: 23860803.8
(22) Date of filing: 28.08.2023
(51) Int. Cl.: B65H 37/00, B65H 43/04, B41J 3/407, B23K 26/18, H01M 4/04

(54) **REFERENCE POINT MARKING APPARATUS AND ROLL MAP GENERATING APPARATUS**

(30) Priority: 29.08.2022 KR 20220108292
(71) Applicant: LG Energy Solution, Ltd., Seoul 07335 (KR)
(72) Inventor: KOH, Jee Yeon, Daejeon 34122 (KR); KANG, Kyu Taek, Daejeon 34122 (KR); KIM, June Hee, Daejeon 34122 (KR); SIM, Min Kyu, Daejeon 34122 (KR); PARK, Jong Seok, Daejeon 34122 (KR); KIM, Min Su, Daejeon 34122 (KR)
(74) Representative: BCKIP Part mbB
(86) International application number: PCT/KR2023/012695
(87) International publication number: WO 2024/049127

(57) **Abstract**

The present technology relates to a reference point marking apparatus for marking reference points on a pattern electrode in which coated portions and uncoated portions are repeatedly arranged in a longitudinal direction, in which the pattern electrode includes a plurality of reserved electrode lane parts to be slit into a plurality of electrode lanes in the longitudinal direction in a subsequent process, and the reference point marking apparatus includes a moving marking machine configured to mark reference points on uncoated portions of the reserved electrode lane parts arranged in a width direction of the pattern electrode while moving in the width direction, and a controller configured to control an operation of the moving marking machine. The present technology also provides a roll map generation apparatus using the reference point marking apparatus.

## Description

### [Technical Field]

The present invention relates to a reference point marking apparatus for efficiently marking reference points on a pattern electrode in which coated portions and uncoated portions are repeatedly arranged in a longitudinal direction.

The present invention also relates to a roll map generation apparatus using the reference point marking apparatus.

This application claims the benefit of priority based on Korean Patent Application No. 1 0-2022-0108292, filed on August 29, 2022, and the entire content of the Korean patent application is incorporated herein by reference.

### [Background Art]

With the development of technologies for mobile devices and an increase of the demand for mobile devices, the demand for secondary batteries is sharply increasing. Among secondary batteries, lithium secondary batteries have been widely used as energy sources of various types of electronic products as well as various types of mobile devices in terms of high energy density, a high operating voltage, and excellent preservation and lifespan characteristics thereof.

A so-called electrode process of manufacturing electrodes of a lithium secondary battery includes a coating process of forming a positive electrode and a negative electrode by applying an active material and an insulating material to a surface of a metal electrode plate, which is a current collector, a roll press process of rolling the coated electrodes, and a slitting process of cutting the rolled electrodes according to sizes.

In the electrodes manufactured by the electrode process, electrode tabs are formed by a notching process, a separator is interposed between the positive electrode and the negative electrode to form an electrode assembly, and thereafter, the electrode assembly is stacked, folded, or wound to be packaged into a pouch or a can, and an electrolyte is injected by an assembly process, thereby achieving a form of secondary battery. Thereafter, the assembled secondary battery is charged or discharged and an activation process is performed to give battery characteristics, thereby achieving a secondary battery as a final finished product.

When a fracture or defect occurs in an electrode in the electrode process, a fractured or defective portion may be removed and discontinuous portions of the electrode may be connected by a connection tape. To maintain the quality of the electrode, a front or rear end portion of the electrode that is not uniform in quality may be removed. In this case, a worker may arbitrarily input the length of a cut portion (electrode loss rate) of the electrode to a controller or the like after the front or rear end portion of the electrode is removed and discontinuous portions of the electrode are connected. However, because the electrode loss rate is manually measured and input by the worker, an actual consumed electrode loss rate cannot be accurately identified. In addition, an input electrode loss rate may vary according to a worker.

In this case, the fracture of the electrode and the connection of the discontinuous portions of the electrode may be identified by detecting the connection tape in a subsequent process but the electrode loss rate is input by the worker and thus an accurate electrode loss rate is difficult to identify. When a loss rate of a cut part of the electrode is not accurate, the coordinates of a position of the electrode may change in a subsequent process, thus preventing the subsequent process from being performed at a desired position. When changes in quality in sub-processes of the electrode process are compared and analyzed, a criterion may vary according to an electrode loss rate, thus preventing a quality comparison from being reliably performed according to the position of an electrode.

Recently, a roll map has been used to simulate an electrode that is in a roll-to-roll state and display data about quality or a defect on a roll map bar displayed on a screen. Because such a roll map is individually created in sub-processes of the electrode process, such as a coating process, a roll press process, and a slitting process, information about the roll map is downloaded to check information about a defect in quality or a fracture of an electrode in a preceding process and check the data and remove the defect or perform a necessary follow-up process in a subsequent process. However, when an electrode loss rate is not accurately identified as described above, location data of the electrode displayed on the roll map may change, thus preventing data about quality or a position of a defect from being accurately displayed, and there is a risk of performing the subsequent process on the basis of the coordinates of a wrong position when the roll map is referred to in the subsequent process.

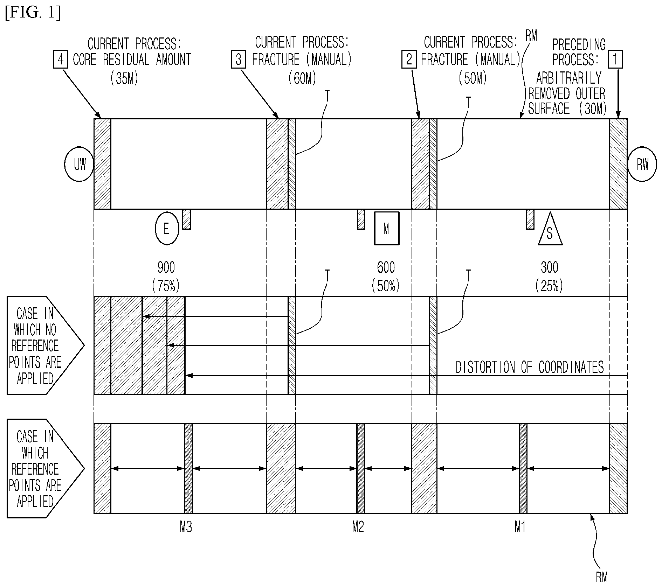

FIG. 1 is a schematic diagram illustrating distortion of the coordinates of an electrode in a longitudinal direction according to whether there are reference points, when a loss occurs in the electrode.

An upper drawing of FIG. 1 illustrates a roll map RM that simulates a movement of an electrode in the roll-to-roll state between an unwinder UW and a rewinder RW. For convenience of description, FIG. 1 illustrates only a fracture of an electrode and a connection tape T although a large amount of data about details of quality and defects is visually displayed on the actual roll map RM.

The roll map RM on the upper drawing of FIG. 1 simulates an actual electrode and various types of fractures occur in the actual electrode. A 50 m fracture and a 60 m fracture occurring when one (current process) of the sub-processes of the electrode process was performed are displayed on a roll map (RM). In addition, the removal of a front end portion of the electrode by 30 meters in a process before entering the corresponding process and the removal of a rear end portion thereof by 35 meters in the corresponding process are displayed.

In this case, when the fractures or the removed front and rear end portions of the electrode (electrode loss portions) are considered, only the connection tape T connecting the fractures remains as shown in a middle drawing of FIG. 1. That is, the middle drawing of FIG. 1 illustrates a form of the actual electrode. In the middle drawing, for example, the position of the connection tape T may be detected, for example, by a seam detection sensor. However, because the fractures or the removed portions of the electrode do not actually remain on the electrode and thus an electrode loss rate corresponding to the length of the removed portions (loss portions) of the electrode cannot be identified. As described above, data about the removed portions of the electrode is manually input by a worker and thus it is difficult to identify an accurate electrode loss rate.

When the electrode loss rate cannot be identified, the roll map RM of the electrode process may be as shown in the middle drawing of FIG. 1, thus resulting in distortion of the coordinates of positions on the roll map. In the upper drawing of FIG. 1, for convenience of description, the connection tape T is also illustrated on an assumption that the lengths of the fractures/removed portions of the electrode are known, and the form shown in the middle drawing of FIG. 1 is achieved when an actual electrode loss occurs.

A lower drawing of FIG. 1 shows that the distortion of the coordinates on the roll map RM is prevented using reference points.

In the roll map RM in the lower drawing of FIG. 1, electrode loss parts are displayed using reference points M1, M2, and M3 at predetermined intervals. The number of the reference points M1, M2, and M3 and the intervals may vary according to the length or specifications of the electrode. In FIG. 1, it is assumed that the length of an electrode is 1200 m, and the reference points M1, M2, and M3 are marked at points of 300 m, 600 m, and 900 m, respectively. When the reference points M1, M2, and M3 are actually marked on an actual electrode and measured when an electrode loss occurs, intervals among the reference points M1, M2, and M3 change and thus an electrode loss rate may be easily identified on the basis of a rate of change. When the electrode loss rate is identified as described above, the reference points M1, M2, and M3 and an electrode loss length may be displayed together as shown in the roll map RM in the lower drawing of FIG. 1. Accordingly, the dimensions (absolute coordinates) of the electrode in the longitudinal direction in which the electrode loss length is reflected and the dimensions (relative coordinates) of the electrode in the longitudinal direction in which the electrode loss length is not reflected may be displayed together on one roll map.

As described above, when reference points are employed for an electrode, an electrode loss rate may be identified by comparing the positions of the reference points before a change of an interval between the reference points with the measured positions of the reference points and be reflected on a roll map.

In addition, the reference points serve as references for identifying and specifying an individual battery together with cell identification (ID) given to each electrode in an electrode coating process, a roll press and slitting process, an assembly process such as notching, a process of winding and transferring an electrode, a battery can insertion process, etc. Therefore, when a problem such as a defect occurs in a specific process, quality control can be easily performed by analyzing or tracking a cause on the basis of the cell ID and the reference points.

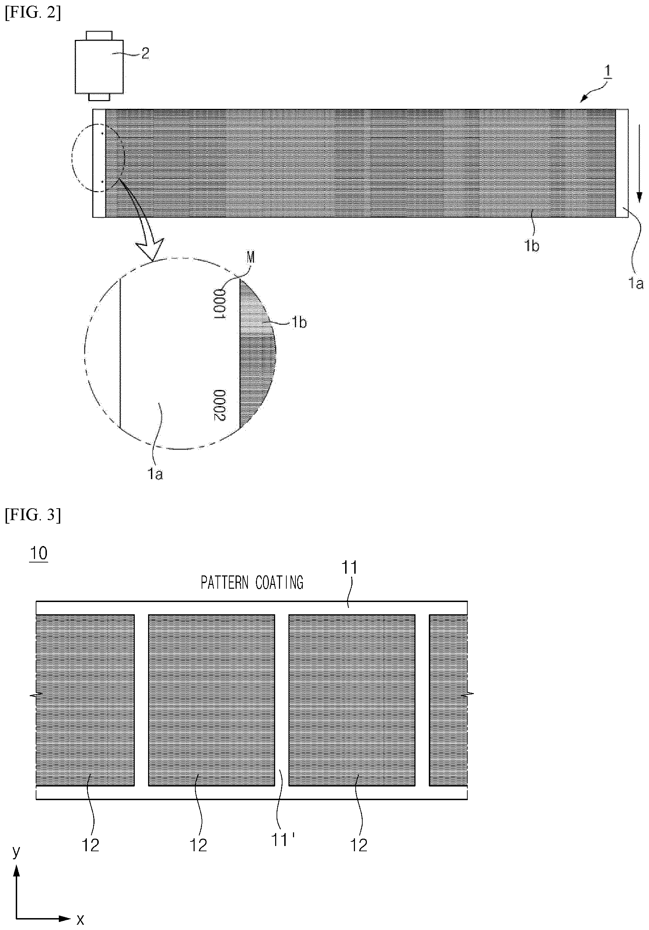

FIG. 2 is a schematic diagram illustrating marking reference points on an electrode with a single electrode lane.

In the drawing, an arrow indicates a driving direction of an electrode 1. In the electrode 1, uncoated portions 1a are formed on both ends of a coated portion 1b. Therefore, it was sufficient to mark reference points M on the uncoated portion(s) 1a on an end or both ends of the electrode 1 using a reference point marking machine 2 of the related art.

However, such conventional marking devices are not suitable to mark reference points on a so-called pattern electrode.

FIG. 3 illustrates an example of a pattern electrode 10.

The pattern electrode 10 is an electrode in which coated portions 12 and uncoated portions 11' are repeatedly arranged in the longitudinal direction to form a pattern.

In a subsequent process, the pattern electrode 10 is slit in the width direction with respect to the non-coated portion 11' between the coated portions 12. One coated portion 12 slit from the pattern electrode 10 may be stacked with a coated portion of an electrode of different polarity and a separator to form a stack cell type electrode assembly or be wound with the coated portion and a separator of the electrode of the different polarity to form a jelly roll type electrode assembly.

In particular, in the case of a pattern electrode for use in a small-sized battery, first, a plurality of electrode lanes are formed by slitting the pattern electrode in the longitudinal direction before slitting the uncoated portion 11' in the width direction. Then, the uncoated portion 11' between coated portions of each of the electrode lanes is cut. In this case, an electrode assembly may be formed by stacking or winding the coated portions of each of the electrode lanes.

When a marking apparatus of FIG. 2 is applied to a pattern electrode as shown in FIG. 3, the following problems may occur.

First, after the manufacture of the pattern electrode, uncoated portions (knurling portions) 11 at both ends of the pattern electrode in the width direction are removed in a slitting process. However, as shown in FIG. 2, in the related art, reference points are marked on the uncoated portions 11 at both ends of the pattern electrode in the width direction and thus are removed after the slitting process. Thus, a gray zone in which quality control cannot be performed on the basis of the reference points is generated between the slitting process and a winding process.

Second, in the case of a large electrode, reference points are marked in unit of lengths (e.g., meters (m)), and a roll map is created or corrected by adding coordinates in units of length when an interval between the reference points changes due to a defect. However, a small electrode such as a pattern electrode is small in size and thus is managed in units of pattern numbers of coated portions, together with the coordinates of such length units. That is, as the coordinates of the electrode in the longitudinal direction, coordinates may be assigned in units of pattern numbers, together with meter information, and a specific position in the longitudinal direction may be also displayed using a pattern number. A roll map of the pattern electrode may also be expressed in units of pattern numbers. Therefore, it is necessary to change a reference point marking mechanism of a large electrode to be suitable to mark reference points on a small electrode.

Third, when a pattern electrode is slit into a plurality of electrode lanes, a plurality of marking machines are required to mark reference points on each of the electrode lanes. However, when the number of marking machines increases, manufacturing costs increase and an installation process is complicated. The number of optical components required for each marking machine increases, thus greatly increasing manufacturing costs. In addition, a space, for accommodation of a plurality of marking machines, between reserved electrode lane parts of a small pattern electrode is insufficient.

Therefore, there is a need to develop a technique for efficiently marking reference points on a pattern electrode.

### [Related Art Literature]

### [Patent Document]

Korean Registered Patent Publication No. 10-601567

### [Disclosure]

### [Technical Problem]

The present invention is directed to providing a reference point marking apparatus for efficiently marking reference points on a pattern electrode in which coated portions and uncoated portions are repeatedly arranged in a longitudinal direction.

The present invention is also directed to providing a roll map generation apparatus for effectively displaying information about reference points and information about defects on a roll map by using the reference point marking apparatus.

### [Technical Solution]

An aspect of the present invention provides a reference point marking apparatus for marking reference points on a pattern electrode in which coated portions and uncoated portions are repeatedly arranged in a longitudinal direction, in which the pattern electrode includes a plurality of reserved electrode lane parts to be slit into a plurality of electrode lanes in the longitudinal direction in a subsequent process, and the reference point marking apparatus includes a moving marking machine configured to mark reference points on uncoated portions of the reserved electrode lane parts arranged in a width direction of the pattern electrode while moving in the width direction, and a controller configured to control an operation of the moving marking machine.

The uncoated portions of the reserved electrode lane parts may include portions to be slit in the width direction in a subsequent process, and the reference points may be marked on regions of the uncoated portions instead of the portions to be slit in the width direction.

The moving marking machine may mark reference points when the pattern electrode is moved in the longitudinal direction.

In this case, when the moving marking machine marks reference points on the uncoated portions of the plurality of reserved electrode lane parts while moving in the width direction, a marking path may be a diagonal path inclined backward in the longitudinal direction due to the speed of movement of the pattern electrode in the longitudinal direction.

More specifically, the moving marking machine may sequentially mark reference points on the uncoated portions of each of reserved electrode lane parts at positions pushed backward by one pattern in the longitudinal direction.

The moving marking machine may mark reference points on the uncoated portions of the plurality of uncoated portions at intervals of predetermined pattern numbers of the coated portions in the longitudinal direction.

The pattern electrode may be a double-sided electrode, the upper surface and the lower surface of which are coated with an electrode active material, and the moving marking machine may be installed on the upper surface and the lower surface of the pattern electrode.

The reference point marking apparatus may further include a position measuring device configured to obtain, as coordinate data, data about a position of the pattern electrode in the longitudinal direction according to an amount of rotation of an unwinder or a rewinder and represent the coordinate data in the form of pattern number unit data of the coated portions, when the pattern electrode is moved in the roll-to-roll state between the unwinder and the rewinder in the longitudinal direction, and the controller may control the moving marking machine to mark reference points on the uncoated portions of the plurality of reserved electrode lane parts at intervals of the pattern numbers of the coated portions, based on the pattern number unit data.

The marked reference points may include sequence information of the reserved electrode lane parts and pattern number units or pattern sequence information of the reference points in the longitudinal direction of the pattern electrode.

The reference point marking apparatus may further include a defect marking machine that marks a defect on an uncoated portion on one end of the pattern electrode or uncoated portions on both ends thereof in the width direction and is disposed in parallel with the moving marking machine in the width direction of the pattern electrode.

In this case, a guide shaft may be disposed on the pattern electrode in the width direction.

The moving marking machine and the defect marking machine may be coupled to the guide shaft.

The moving marking machine may be installed to be movable along the guide shaft.

At least one defect inspector configured to inspect the pattern electrode to obtain inspection data of a defect and obtain coordinate data of the pattern electrode related to a defective point and/or a defective section at which the inspection data is obtained and pattern number unit data in connection with the position measuring device may be provided before a position of the defect marking machine, and the defect marking machine may mark a defect on the uncoated portion(s) on the one end or the both ends of the pattern electrode in the width direction on the basis of the coordinate data and the pattern number unit data received from the at least one defect inspector.

The controller may calculate a point in time when the defective point and/or the defective section will reach the at least one defect inspector, based on a distance between the at least one defect inspector and the defect marking machine and the speed of movement of the pattern electrode, and control the defect marking machine to mark a defect on the defective point and/or the defective section at the point in time.

Another aspect of the present invention provides a roll map generation apparatus including a position measuring device configured to obtain, as coordinate data, data about a position of a pattern electrode in a longitudinal direction of the pattern electrode according to an amount of rotation of an unwinder or a rewinder when the pattern electrode is moved in the roll-to-roll state between the unwinder and the rewinder, and represent the coordinate data in the form of pattern number unit data of coated portions, wherein coated portions and uncoated portions are repeatedly arranged on the pattern electrode;
a marking machine configured to mark reference points on the pattern electrode at predetermined intervals in the longitudinal direction of the pattern electrode in connection with the position measuring device; and
a roll map generator configured to obtain the coordinate data related to the position of the pattern electrode in the longitudinal direction, the pattern number unit data of the coated portions, and pattern number unit data of the reference points in connection with the position measuring device and the marking machine, and generate a roll map, which simulates an electrode moving in the roll-to-roll state, by displaying at least the pattern number unit data on the roll map.

The pattern electrode includes a plurality of reserved electrode lane parts to be slit into a plurality of electrode lanes in the longitudinal direction of the pattern electrode in a subsequent process.

The marking machine is a moving marking machine configured to mark reference points on uncoated portions of the reserved electrode lane parts arranged in a width direction of the pattern electrode while moving in the width direction.

The roll map generator generates a roll map of the pattern electrode and a roll map of each of the reserved electrode lane parts on the basis of the pattern number unit data marked by the moving marking machine.

The roll map generation apparatus may further include a defect marking machine that marks a defect on an uncoated portion on one end of the pattern electrode or both ends thereof in the width direction and is disposed in parallel with the moving marking machine in the width direction of the pattern electrode.

At least one defect inspector configured to inspect the pattern electrode to obtain inspection data of a defect and obtain coordinate data of the pattern electrode related to a defective point and/or a defective section at which the inspection data is obtained and pattern number unit data in connection with the position measuring device may be provided before a position of the defect marking machine.

The defect marking machine may mark a defect on the uncoated portion(s) on the one end or the both ends of the pattern electrode in the width direction on the basis of the coordinate data and the pattern number unit data received from the defect inspector.

The roll map generator may mark both the reference point and defects on a roll map on the basis of the coordinate data and the pattern number unit data.

### [Advantageous Effects]

According to the present invention, reference points can be marked to correspond to all a plurality of reserved electrode lane parts using a moving marking machine moving in a width direction of a pattern electrode.

Therefore, the number of marking machines required to mark reference points can be greatly reduced, thus greatly reducing manufacturing costs.

According to the present invention, a roll map that simulates a pattern electrode and each reserved electrode lane part can be implemented using the reference point marking apparatus on the basis of pattern number unit data of reference points. Both information about reference points and information about electrode defects can be displayed on the roll map. Therefore, data related to poor quality of the pattern electrode can be easily visually identified at a glance in relation to the reference points.

In addition, the roll map on which the reference points are displayed can be referred to in sub-processes of an electrode process, thus facilitating performing processing, defect removal, quality tracking and management, and the like in the subsequent processes.

### [Brief Description of the Drawings]

FIG. 1 is a schematic diagram illustrating distortion of the coordinates of an electrode in a longitudinal direction according to whether there are reference points, when a loss occurs in the electrode.
FIG. 2 is a schematic diagram illustrating marking reference points on an electrode with a single electrode lane.
FIG. 3 is a schematic view of an example of a pattern electrode.
FIG. 4 is a schematic view of a reference point marking apparatus of a first embodiment of the present invention.
FIG. 5 is a schematic diagram illustrating a process of operating a moving marking machine according to the first embodiment.
FIG. 6 is a schematic diagram illustrating marking reference points according to the first embodiment.
FIG. 7 is a schematic diagram illustrating a battery assembling process after a pattern electrode is slit.
FIG. 8 is a schematic view of a reference point marking apparatus of a second embodiment of the present invention.
FIG. 9 is a schematic diagram illustrating a process of operating a moving marking machine according to the second embodiment.
FIG. 10 is a schematic diagram illustrating the marking of reference points and defects according to the second embodiment.
FIG. 11 is a schematic view of a roll map generation apparatus according to another aspect of the present invention.
FIG. 12 is a schematic view of a data visualizing device included in a roll map generator.
FIG. 13 is a schematic view of a roll map of a pattern electrode generated by a roll map generation apparatus of the present invention.

### [Best Mode]

Hereinafter, a configuration of the present invention will be described in detail with reference to the accompanying drawings and various embodiments. Embodiments described below are provided as examples to help the understanding of the present invention, the accompanying drawings are not drawn on actual scale to help the understanding of the present invention, and the sizes of some components may be exaggerated.

The present invention may be embodied in many different forms and implemented in various embodiments. Thus, certain embodiments are illustrated in the drawings and described in detail herein. It should be, however, understood that the present invention is not limited to particular embodiments and include all modifications, equivalents, and alternatives falling within the idea and scope of the present invention.

A reference point marking apparatus according to an embodiment of the present invention is an apparatus for marking reference points on a pattern electrode in which coated portions and uncoated portions are repeatedly arranged in a longitudinal direction, in which the pattern electrode includes a plurality of reserved electrode lane parts to be slit into a plurality of electrode lanes in the longitudinal direction in a subsequent process, and the reference point marking apparatus includes a moving marking machine configured to mark reference points on uncoated portions of the reserved electrode lane parts arranged in a width direction of the pattern electrode while moving in the width direction, and a controller configured to control an operation of the moving marking machine.

A roll map generation apparatus of another aspect of the present invention includes a position measuring device configured to obtain, as coordinate data, data about a position of a pattern electrode in a longitudinal direction of the pattern electrode according to an amount of rotation of an unwinder or a rewinder when the pattern electrode is moved in the roll-to-roll state between the unwinder and the rewinder, and represent the coordinate data in the form of pattern number unit data of coated portions, wherein coated portions and uncoated portions are repeatedly arranged on the pattern electrode;

A marking machine configured to mark reference points on the pattern electrode at predetermined intervals in the longitudinal direction of the pattern electrode in connection with the position measuring device; and
a roll map generator configured to obtain the coordinate data related to the position of the pattern electrode in the longitudinal direction, the pattern number unit data of the coated portions, and pattern number unit data of the reference points in connection with the position measuring device and the marking machine, and generate a roll map, which simulates an electrode moving in the roll-to-roll state, by displaying at least the pattern number unit data on the roll map.

The pattern electrode includes a plurality of reserved electrode lane parts to be slit into a plurality of electrode lanes in the longitudinal direction of the pattern electrode in a subsequent process.

The marking machine is a moving marking machine configured to mark reference points on uncoated portions of the reserved electrode lane parts arranged in a width direction of the pattern electrode while moving in the width direction.

The roll map generator generates a roll map of the pattern electrode and a roll map of each of the reserved electrode lane parts on the basis of the pattern number unit data marked by the moving marking machine.

### [Embodiments of the present invention]

### <Reference Point Marking Apparatus>

### (First Embodiment)

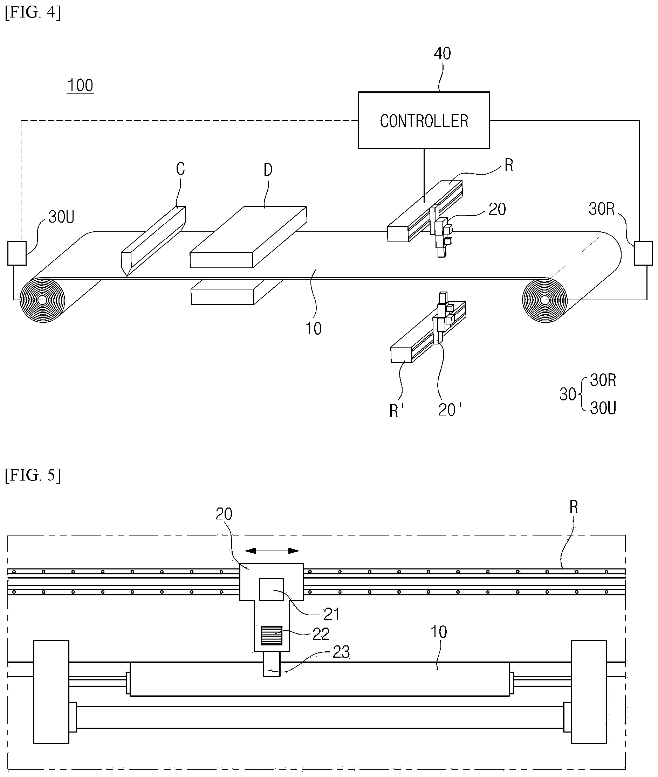

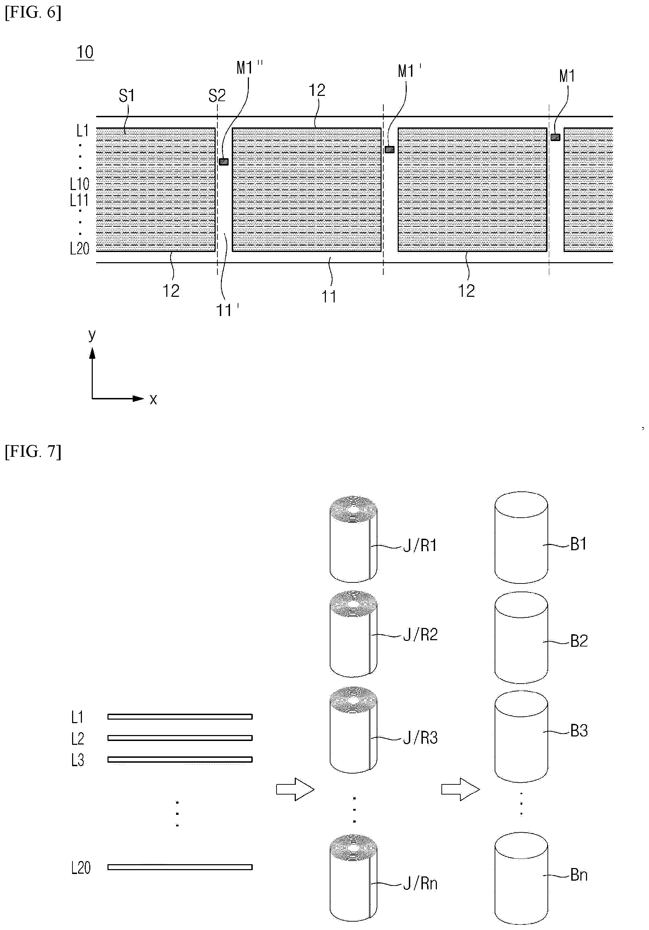

FIG. 4 is a schematic view of a reference point marking apparatus of a first embodiment of the present invention. FIG. 5 is a schematic diagram illustrating a process of operating a moving marking machine according to the first embodiment. FIG. 6 is a schematic diagram illustrating marking reference points according to the first embodiment. FIG. 7 is a schematic diagram illustrating a battery assembling process after a pattern electrode is slit.

A reference point marking apparatus 100 of the present invention is an apparatus for marking reference points on a pattern electrode 10 in which coated portions 12 and uncoated portions 11' are repeatedly arranged in a longitudinal direction. The pattern electrode 10 includes a plurality of reserved electrode lane parts to be slit into a plurality of electrode lanes in the longitudinal direction in a subsequent process. The reference point marking apparatus 100 includes a moving marking machine 20 for making reference points on the uncoated portion 11' of each of the reserved electrode lane parts arranged in a width direction Y of the pattern electrode 10 while moving in the width direction Y, and a controller 40 for controlling operations of the moving marking machine 20.

In the present invention, the pattern electrode 10, which is a reference point marking target, is an electrode in which the coated portions 12 and the uncoated portions 11' are repeatedly arranged as shown in FIG. 6. That is, the pattern electrode 10 is an electrode coated with the coated portion 12 according to a predetermined number of patterns in the longitudinal direction X of the electrode. The coated portion 12 is coated with an electrode active material. As shown in FIG. 4, when an electrode (current collector) is moved in the roll-to-roll state between an unwinder UW and a rewinder RW, an electrode active material is intermittently discharged from a coater C to the current collector, thus forming the pattern electrode 10 in which the coated portions 12 and the uncoated portions 11' are repeatedly arranged. The coated portion 12 is dried as the coated electrode passes through an electrode oven D. The reference point marking apparatus 100 of the present invention may be disposed after the electrode oven D to mark a reference point M on the pattern electrode 10.

Referring to FIG. 6, the pattern electrode 10 includes a plurality of reserved electrode lane parts L1, ..., L20 to be slit into a plurality of electrode lanes in the longitudinal direction X in a subsequent process (a slitting process). The pattern electrode 10 of FIG. 6 includes a total of twenty reserved electrode lane parts L1 to L20. That is, a predetermined number of reserved electrode lane parts (twenty reserved electrode lane parts in the current embodiment) are arranged on the pattern electrode 10 in the width direction Y.

Similarly, the coated portion 12 and the uncoated portion 11' are repeatedly arranged on each of the reserved electrode lane parts, which are reference point marking targets, in the longitudinal direction of the electrode. The reference point M is marked on the uncoated portion 11' between the coated portions 12 of each of the reserved electrode lane parts. As described above, reference points are reference information for quality control and tracking in an electrode process, an assembly process, a subsequent winding process, and the like. Therefore, the form of the reference points on the each of the reserved electrode lane parts should be maintained without being damaged even when the subsequent slitting process is performed. Therefore, the reference point need be marked in a range of upper and lower limits of each of the reserved electrode lane parts in the width direction (i.e., a boundary line S1 between adjacent reserved electrode lane parts). That is, it is preferable that the reference point be marked not to span the boundary line S1 between adjacent electrode lanes.

The uncoated portion 11' of each of the reserved electrode lane parts is slit in the width direction in a subsequent process. Therefore, the uncoated portion 11' includes a portion to be slit in the width direction (a reserved line S2). When the reference point spans the portion to be slit, the form of the reference point M may be damaged when slitting is performed in the width direction. Therefore, the reference point should not be marked on the portion to be slit in the width direction. That is, the reference point is marked on a portion of the uncoated portion 11' rather than the portion to be slit in the width direction (see FIG. 6).

As shown in FIGS. 4 and 5, the moving marking machine 20 of the present invention marks reference points on the uncoated portion 11' of each of the reserved electrode lane parts while moving in the width direction of the pattern electrode 10. Accordingly, it is possible to mark reference points on the uncoated portion 11' of each of the reserved electrode lane parts using one moving marking machine 20 without individually installing a marking machine along each of the reserved electrode lane parts. Alternatively, when necessary, a plurality of reserved electrode lane parts may be divided into a predetermined number of groups of reserved electrode lane parts and reference points may be marked on each of the groups using one moving marking machine 20. In this case, the number of moving marking machines 20 may be installed to correspond to the number of groups. In this case, it is not necessary to install a moving marking machine for each of the reserved electrode lane parts and thus the number of required moving marking machines may be reduced. The moving marking machine 20 may mark reference points on the uncoated portions 11' of the reserved electrode lane parts while moving from one side to another side or from the other side to the side in the width direction. The moving marking machine 20 does not mark reference points on the uncoated portions 11 on an end or both ends of the pattern electrode 10 in the width direction, unlike in the related art. Instead, the reference points are marked on the uncoated portion 11' between the coated portions 12 of each of the reserved electrode lane parts. Therefore, even when an uncoated portion 11 on one end of the pattern electrode 10 or uncoated portions 11 of both ends thereof are removed by slitting, the reference points M remain and thus may be referred to when a roll map is generated or quality control is performed. Even when each of the reserved electrode lane parts is slit in the longitudinal direction, the reference points marked between the coated portions 12 of the reserved electrode lane parts remain and thus may be referred to when a roll map is generated in units of pattern numbers of the coated portions 12. In addition, even when the reserved electrode lane parts are slit into electrode lanes in the longitudinal direction and the electrode lanes are slit in the width direction, the reference points remain and thus each battery cell may be managed on the basis of the reference points even when the coated portions 12 are wound or inserted into the battery cans B1, ..., Bn. Therefore, according to the present invention, the pattern electrode 10, which is a small electrode, can be managed or displayed in units of pattern numbers to create a roll map.

The moving marking machine 20 may be, for example, an inkjet type ink marking machine, a laser type laser marking machine, or a punching type marking machine but is not limited thereto. An appropriate marking machine may be selected and used in a range in which the visibility of the reference points M is excellent and the uncoated portions 11' are not damaged. When a laser or punching type marking machine is used, the uncoated portions 11' may be damaged and thus care should be taken when the reference points M are marked.

Referring to FIG. 5, according to an embodiment, the moving marking machine 20 may be movably coupled to a guide shaft R installed on the pattern electrode 10 in the width direction. A moving mechanism of the moving marking machine 20 along the guide shaft R may be a well-known linear moving mechanism. For example, the moving marking machine 20 may include a linear motor movable linearly along the guide shaft R. A part of the moving marking machine 20 guided when moving along the guide shaft R may be provided with a linear motor (LM) guide mechanism with a bearing to reduce friction. Such a linear moving mechanism is well-known and thus a detailed description thereof will be omitted here.

The moving marking machine 20 may further include a marking part 23. When the moving marking machine 20 is an ink marking machine, the marking part may be a nozzle part connected to an ink supply (not shown).

The moving marking machine 20 may include a vision camera 21 or a detection sensor to detect and differentiate the coated portion 12 and the uncoated portion 11. The vision camera 21 may identify a boundary between the coated portion 12 and the uncoated portion 11' to allow the marking part 23 to perform marking on a predetermined marking position of the uncoated portion 11'. The detection sensor may be a detection sensor capable of identifying the position of the uncoated portion by comparing a color or brightness of a coated portion with that of an uncoated portion. For example, a color sensor or an optical sensor capable of identifying brightness may be used. The moving marking machine 20 may further include a lighting device 22 to allow the vision camera 21 or the recognition sensor to easily identify the uncoated portion 11' and the coated portion 12. Optical components such as a vision camera and a lighting device are expensive. The present invention is advantageous in that the number of expensive optical components can be significantly reduced because the reference point M can be marked on desired parts of a plurality of reserved electrode lanes using one moving marking machine 20 or a small number of moving marking machines 20. The moving marking machine 20 may determine a marking position using the vision camera or sensor and mark a reference point at the determined marking position using encoder information.

The moving marking machine 20 moves in the width direction Y and thus a range of movement thereof need be set. To this end, a limit sensor (not shown) may be provided. The limit sensor and the controller 40 may be connected with each other, and the controller 40 may regulate the range of movement of the moving marking machine 20 according to a position detected by the limit sensor. The moving marking machine 20 may include a stopper (not shown) to prevent collision as needed. Alternatively, a mechanical and/or electronic stopper mechanism may be provided on the moving marking machine 20 or the guide shaft R coupled to the moving marking machine 20.

The controller 40 controls the moving marking machine 20 to mark reference points M at predetermined positions and at predetermined intervals in the longitudinal direction of the pattern electrode 10. In particular, as shown in FIG. 4, when the pattern electrode 10 is moved in the longitudinal direction X, the controller 40 may control the moving marking machine 20 to mark reference points.

Because the moving marking machine 20 moves in the width direction, the movement, the speed of movement, etc. thereof may also be controlled by the controller 40. When the controller 40 is a programmable logic controller (PLC) that controls the transfer of electrodes, the controller 40 may control the speed of movement of the pattern electrode 10 in the longitudinal direction and determine the speed of movement of the moving marking machine 20 in connection with the speed of movement of the pattern electrode 10. That is, the controller 40 may control the moving marking machine 20 to mark a reference point at a desired marking position by taking into account the speed of movement of the pattern electrode 10, the speed of movement of the moving marking machine 20, positions at which reference points are marked, a marking interval, and the like.

The reference point marking apparatus 100 of the present invention may further include a position measuring device 30 for obtaining data about a position of the pattern electrode 10 in the longitudinal direction as coordinate data to identify the position of the pattern electrode 10 in the longitudinal direction and the marking interval. The position measuring device 30 may obtain, as coordinate data, data about the position of the pattern electrode 10 in the longitudinal direction according to the amount of rotation of the unwinder UW or the rewinder RW. For example, rotary encoders 30U and 30R that extract position values of the pattern electrode 10 from the amount of rotation of a motor driving the unwinder UW or the rewinder RW may be used as the position measuring device 30. For convenience of description, FIG. 4 illustrates that the rotary encoder 30U of the unwinder UW and the rotary encoder 30R of the rewinder RW are respectively disposed outside the unwinder UW and the rewinder RW but the encoders 30U and 30R may be respectively included in the unwinder UW and the rewinder RW.

The position measuring device 30 may measure and specify the coordinates of the position of the pattern electrode 10 in the longitudinal direction in units of meters (m). In the present invention, the coordinates of the position are specified in units of meters and obtained in units of pattern numbers of the coated portion to be matched with the pattern electrode 10 for use in a small battery. For example, when there are 1200 patterns for coated portions with respect to the length of the entire pattern electrode 10, the pattern electrode 10 may be defined as an electrode with a length corresponding to a total of 1200 pattern numbers. In this case, the length of one coated portion may be defined as one unit (coordinate). When reference points are marked on points on the pattern electrode 10 corresponding to 25%, 50%, and 75% of the length of the pattern electrode 10, the reference points are marked on uncoated portions corresponding to 300^{th}, 600^{th}, and 900^{th} patterns for coated portions. In this case, the distance between reference points is 300 patterns as a pattern number. The length and width of a pattern of a coated portion may vary according to the type of the pattern electrode 10. However, even when the length of the pattern of the coated portion changes, the length of a pattern of an individual coated portion is the same and thus the position of the pattern electrode 10 in the longitudinal direction may be specified by taking into account the length of one pattern as a coordinate. A roll map may be created on the basis of units of pattern numbers, as will be described below.

The position measuring device (rotary encoder) may count ` 1' per rotation of the motor when the unwinder UW or the rewinder RW rotates by a length corresponding to one pattern number to express the position of the pattern electrode 10 in the longitudinal direction using coordinates of pattern number units.

As shown in FIG. 4, when the pattern electrode 10 is moved in the roll-to-roll state in the longitudinal direction while being connected to the position measuring device 30, the controller 40 assigns a marking signal to the moving marking machine 20 on the basis of pattern number unit data when the pattern electrode 10 arrives at a position corresponding to predetermined pattern number. The marking signal is repeatedly generated at intervals of a set pattern number to control the moving marking machine 20 to mark reference points on the uncoated portion 11' of each of the reserved electrode lane parts in the longitudinal direction of the pattern electrode 10 at intervals of the pattern number.

FIG. 6 illustrates an example in which when the pattern electrode 10 is moved in the longitudinal direction, the moving marking machine 20 marks reference point on uncoated portions 11' of a plurality of reserved electrode lane parts while moving in the width direction. When the moving marking machine 20 moves, the pattern electrode 10 is also moved in the longitudinal direction and thus a path of marking by the moving marking machine 20 is a diagonal path inclined backward in the longitudinal direction due to the speed of movement of the pattern electrode 10 in the longitudinal direction.

In the example of FIG. 6, when it is assumed that a first reserved electrode lane part L1 to a twentieth reserved electrode lane part L20 are disposed on the pattern electrode 10 in the width direction, reference points are sequentially marked on the uncoated portions 11' of each of the reserved electrode lane parts at positions pushed backward by one pattern in the longitudinal direction, starting from a second electrode lane part. A distance (pattern number) by which the positions are pushed backward is not limited to one pattern. That is, the distance (pattern number) by which the positions are pushed backward may vary according to a total pattern number of the pattern electrode 10, the length of each pattern, the speed of movement of the pattern electrode 10, the speed of movement of the moving marking machine 20, etc. However, an interval (an interval of a pattern number) between reference points marked on the reserved electrode lane parts is the same.

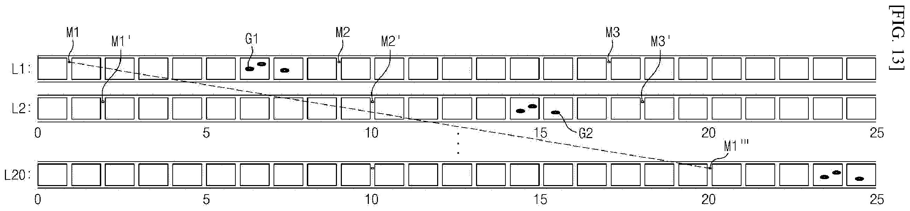

The moving marking machine 20 sequentially marks first reference points M1, M1', M1" ... on the reserved electrode lane parts while relatively moving backward by one pattern in the longitudinal direction from the first reserved electrode lane part L1 to the twentieth reserved electrode lane part L20, and thereafter moves upward in the width direction to return back to the uncoated portion 11' of the first reserved electrode lane part L1. When the pattern electrode 10 is moved in a driving direction X and is spaced an interval of a predetermined pattern number (e.g., 300 patterns) from the first reference point M1 on the first reserved electrode lane part, the moving marking machine 20 draws a diagonal marking path on each of the reserved electrode lane parts while moving downward in the width direction. That is, the moving marking machine 20 marks second reference points M2, M2', M2" ... on reserved electrode lane parts while moving in the width direction. Thereafter, the moving marking machine 20 returns upward in the width direction, and repeatedly performs the above-described marking operation to mark third reference points M3, M3', M3", ... (see FIG. 13).

The pattern electrode 10 of FIG. 4 is a double-sided electrode, the upper surface and lower surface of which are coated with an electrode active material. Accordingly, moving marking machines 20 and 20' may be respectively installed on the upper and lower surfaces of the pattern electrode 10. When the electrode is a double-sided electrode, guide shafts R and R' serving as moving shafts of the moving marking machines 20 and 20' may also be installed on the upper and lower surfaces of the electrode, respectively.

However, the present invention is also applicable to the pattern electrode 10 when the pattern electrode 10 is a single-sided electrode whose only one surface is coated with an active material. In this case, the moving marking machine 20 is installed on the one surface of the pattern electrode 10.

For convenience of description, FIG. 4 illustrates that the reference point marking apparatus 100 simultaneously marks reference points M on the upper and lower surfaces of the pattern electrode 10. However, actually, reference points may be sequentially marked on an upper surface and lower surface of an electrode according to the layout of factory facility. For example, after the upper surface of the pattern electrode 10 is coated with the active material and is dried, the reference point marking apparatus 100 may mark reference points M on the upper surface of the pattern electrode 10, the pattern electrode 10 is consecutively moved while changing a driving path thereof, the lower surface of the pattern electrode 10 is coated with the active material and is dried, and thereafter, the reference point marking apparatus 100 may mark reference points M on the lower surface of the pattern electrode 10. In this case, according to a driving path of an electrode, the reference point marking apparatus 100 may be disposed on upper and lower surfaces of the electrode to mark reference points. Alternatively, reference points M may be marked on both the upper and lower surfaces of the electrode by one reference point marking apparatus 100.

The marked reference points M may include sequence information of the reserved electrode lane parts and pattern number units or pattern sequence information thereof in the longitudinal direction of the pattern electrode 10. That is, the number of a reserved electrode lane part on which a reference point is marked in the width direction may be displayed on the reference point. In addition, the number of pattern numbers may be directly displayed or an order of pattern numbers may be displayed on the reference points to indicate a pattern number corresponding to a position of the uncoated portion 11' on which the reference point is marked.

Such information may be displayed in the form of barcode or using a combination of numbers, Korean characters, English characters, and the like.

For example, in the case of a reference point M on which "A0001" is displayed, "A" indicates sequence information of a reserved electrode lane part corresponding thereto. According to alphabetical order, A represents a first reserved electrode lane part.

The numbers after the alphabet represent pattern information. The pattern information includes a pattern number unit or pattern sequence information of the reference point in the longitudinal direction of the pattern electrode. The numbers after the alphabet is 0001 indicating a first pattern. If "G1372" is displayed on a reference point, G represents a seventh reserved electrode lane part and 1372 represents a 1372^{th} pattern in the longitudinal direction of the pattern electrode.

When the alphabet is used, the reversal of the front and rear ends of the pattern electrode 10 may be identified when the reference points M that are upside down are recognized. That is, in a series of electrode processes, including the coating process, the roll press process, and the slitting process, a rear end of an electrode roll in a preceding process may be a front end of the electrode roll in a subsequent process and thus front and rear ends of an electrode may be reversed and recognized when wound according to a winding direction. In this case, when the reference point M is displayed using the alphabet, a corresponding process can be identified and the reference point M can be displayed on a roll map by reflecting the reversal of the reference point M or appropriately correcting the reference point M, when the alphabet is reversed and recognized.

As described above, when the reference points M displayed using a combination of a character and numbers is used, a pattern number or pattern sequence information of the reference point M and sequence information of a reserved electrode lane part can be identified at a glance. A relation between an order and a pattern number may be input to the controller 40 or a roll map generator, which will be described below.

Information about reference point marking positions input to the controller 40 may be input to the roll map generator, and the roll map generator may generate roll maps of the pattern electrode 10 and each reserved electrode lane part on the basis of the reference point marking positions, as will be described below. As shown in FIG. 6, even when the coordinates of a reference point displayed using a pattern number slightly change according to each reserved electrode lane part, the positions of marked patterns and a marking interval are input and thus a roll map may be easily generated or processed in a subsequent process using the reference points.

For example, according to the present invention, reference points may be efficiently marked on the pattern electrode 10 with a plurality of reserved electrode lane parts in units of pattern numbers by one or more moving marking machines 20, thereby allowing the electrode process and quality control in each of processes to be automatically and efficiently performed..

Referring to FIG. 7, in a subsequent slitting process, the pattern electrode 10 is slit into twenty electrode lanes in the longitudinal direction and the electrode lanes are slit in the width direction to form one electrode part for one pattern of a coated portion. Each electrode part is wound together with an electrode part of a different polarity and a separator to obtain a jelly roll type electrode assembly. Electrode assemblies J/R1, J/R2, J/R3, ..., J/Rn are accommodated in battery cans, an electrolyte is injected into the battery cans, and the battery cans are sealed to form small cylindrical batteries B1, B2, B3, ..., Bn.

Reference points are marked on each electrode lane (reserved part) and one uncoated portion 11' for one pattern of each coated portion by the reference point marking apparatus 100 of the present invention, and used as reference points from the coating process to the winding process. In addition, reference points may remain in a corresponding electrode part even in some of the series of subsequent processes described above and thus be used as reference information when a corresponding process is performed or managed.

### (Second Embodiment)

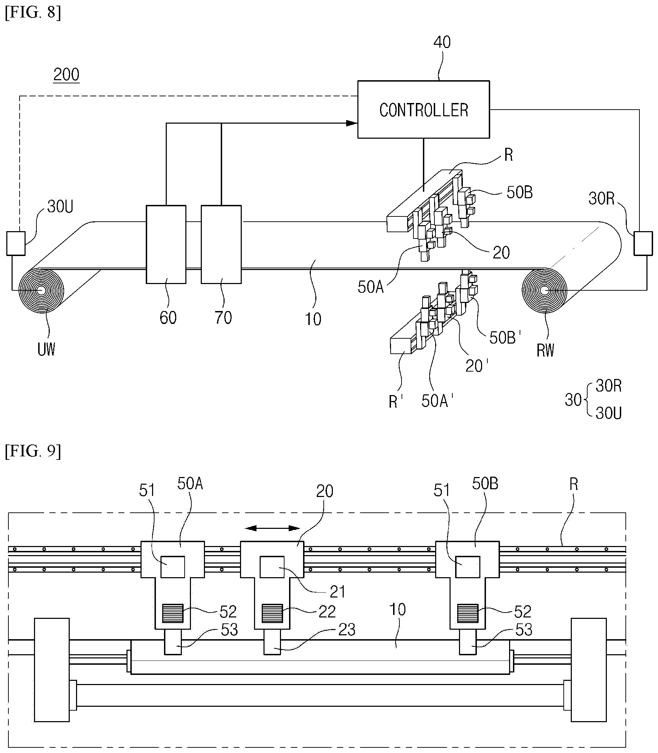

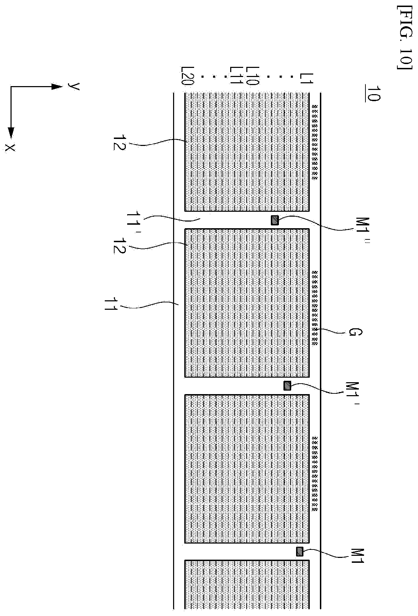

FIG. 8 is a schematic view of a reference point marking apparatus of a second embodiment of the present invention. FIG. 9 is a schematic diagram illustrating a process of operating a moving marking machine according to the second embodiment. FIG. 10 is a schematic diagram illustrating the marking of reference points and defects according to the second embodiment.

In a reference point marking apparatus 200 of the present embodiment, a moving marking machine 20 may mark reference points on each reserved electrode lane part in the width direction and mark a defect on a pattern electrode 10 at the same time.

To this end, the reference point marking apparatus 200 further includes a defect marking machine 50 disposed in parallel with the moving marking machine 20 in a width direction of the electrode. Uncoated portions 11 are provided in the longitudinal direction on one end or both ends of the pattern electrode 10 in the width direction. That is, a predetermined range of the pattern electrode 10 in the width direction is coated with an electrode active material to form coated portions 12, and remain parts of the pattern electrode 10 in the width direction are uncoated portions 11. Therefore, in the pattern electrode 10, an uncoated portion 11' is provided between coated portions 12 in the longitudinal direction of the pattern electrode 10 and uncoated portions 11 are provided on both ends of the pattern electrode 10 in the width direction. As described above, a reference point may be marked on the uncoated portion 11' and defect marking may be performed on the uncoated portion 11.

It is sufficient to perform marking on the uncoated portion 11 on one end in the width direction using one defect marking machine but defect marking machines are needed for both ends to perform marking on the uncoated portions 11 on both ends in the width direction.

In the example of FIG. 8, the reference point marking apparatus 200 for marking a defect on the uncoated portions 11 on both ends of the pattern electrode 10 in the width direction is illustrated.

Referring to FIG. 9, one guide shaft R is provided on the pattern electrode 10 in the width direction, and a total of three marking machines, i.e., the moving marking machine 20 and defect marking machines (a one-end marking machine 50A and an other-end marking machine 50B), are coupled to the guide shaft R. The moving marking machine 20 is installed to be movable along the guide shaft R.

The one-end marking machine 50A and the other-end marking machine 50B may each include a marking part 53, a vision camera 51 (or a detection sensor), and a lighting device 52, similar to the moving marking machine 20.

FIG. 10 illustrates defect marking G performed on an uncoated portion 11 on one end of the pattern electrode 10 by a marking part of a marking machine.

By using the reference point marking apparatus 200 of the present embodiment, reference points may be marked on the pattern electrode 10 in units of pattern numbers, and a defective point or defective section may be marked on the pattern electrode 10 when a defect is detected. Accordingly, because both reference points M and defects may be marked on the pattern electrode 10, the reference points M and the defects may be visually indicated on a roll map on the basis of the marks of the reference points and the defects.

Referring to FIG. 8, defect inspectors 60 and 70 may be placed before the position of the defect marking machine 50 to detect defects. The defect inspectors 60 and 70 may obtain inspection data about defects by inspecting the pattern electrode 10 moving in the roll-to-roll state, and obtain coordinate data of the pattern electrode 10 related to a defective point and/or a defective section at which the inspection data is obtained and pattern number unit data in connection with the position measuring device 30. At least one of the defect inspectors 60 and 70 is disposed before the position of the defect marking machine 50.

The defect marking machine 50 may mark a defective point and/or a defective section (defect marking G) on an uncoated portion 11 on one end of the pattern electrode 10 or uncoated portions 11 on both ends thereof in the width direction, based on the coordinate data and the pattern number unit data received from the defect inspectors 60 and 70. That is, when a defect is detected at a portion of the pattern electrode 10 corresponding to a 450^{th} pattern number by the defect inspector, the defect inspector marks a defect on an uncoated portion 11 on one end of the electrode corresponding to the pattern number or uncoated portions 11 on both ends thereof. When a defect occurs only on a portion of a coated portion corresponding to the pattern number in the longitudinal direction, defect marking G may be performed at a position or section corresponding to the coordinates of the portion on the basis of the coordinate data.

Examples of the defect inspectors 60 and 70 may include an electrode slurry loading rate measuring device, a dimension and width measuring device, an appearance inspector, and the like installed on a transfer line of the pattern electrode 10.

As the electrode slurry loading rate measuring device, a non-contact type thickness measuring sensor such as an ultrasonic sensor, a displacement sensor, a laser sensor, and a confocal thickness sensor may be employed. Because the thickness of an electrode foil is well-known, for example, the confocal thickness sensor is capable of measuring a slurry loading rate by analyzing the wavelength of reflected light of light emitted from the sensor and calculating the distance (thickness) between the sensor and an electrode.

A type of vision measuring device capable of photographing or scanning the appearance of an electrode to be coated to measure the width of the electrode, the widths of a coated portion and an uncoated portion, etc. may be employed as the dimensional and width measuring device. When the widths of the coated portion and the uncoated portion are identified, whether there is a mismatch between the coated portion and the uncoated portion may be also identified.

The appearance inspector may obtain an image of the appearance of an electrode by imaging the appearance of the electrode. From the obtained image, data about appearance defects such as pinholes, lines, and a crater shape may be obtained, and data about on insulation appearance or insulation defects may also be obtained. Examples of the appearance inspector may include a sensor capable of identifying the color of an electrode, e.g., an inspector with a color sensor. A part, e.g., a connection tape or a PET film, of a different color from that of the electrode may be detected using the color sensor.

In addition to the measuring devices or the inspectors described above, a defect inspector for detecting other types of defects may also be applied.

The defect inspectors 60 and 70 may be connected to and with the position measuring device 30 or the controller 40 connected to the position measuring device 30 to obtain location data (coordinates and pattern number unit data) of a defective point at which a defect is detected or a defective section in which the defect occurs continuously in the longitudinal direction. Therefore, the defect inspectors 60 and 70 may not only obtain inspection data about the type, size, shape, properties, etc. of the defect but also obtain coordinate data and pattern number unit data of the position of the electrode at which the inspection data is obtained. The inspection data, the coordinate data, and the pattern number unit data are transmitted to the controller 40. The controller 40 instructs the defect marking machine 50 to mark a defective point and/or a defective section on the basis of the above data. The defect marking machine 50 marks the defective point and/or the defective section (defect marking G) on the basis of the coordinate data and the pattern number unit data.

That is, the defect inspectors 60 and 70 detect a defect at a predetermined position (coordinates) on the pattern electrode 10 in the longitudinal direction, and the controller 40 controls the defect marking machine 50 to mark the defect at the position (coordinates).

Specifically, the controller 40 may calculate a point in time when a part of the pattern electrode 10 corresponding to the defective point and/or the defective section will reach the defect marking machine 50, based on the distances between the defect inspectors 60 and 70 and the defect marking machine 50 and the speed of movement of the pattern electrode 10. At the point in time, the defect marking machine 50 marks the defective point and/or the defective section (defect marking G) according to a marking instruction from the controller 40. As described above, in the present embodiment, the position (coordinates) of the defective point and/or the position (coordinates) of the defective section may be specified on the basis of coordinate data and pattern number unit data received from a defect inspector. In addition, the controller 40 controls the defect marking machine 50 to mark a defect at a specific point in time on the basis of the specified position (coordinates).

When a certain defect inspector is installed to mark a defect, the controller 40 may obtain coordinate data of a defective point or a defective section in connection with the defect inspector and a position measuring device, and instruct the defect marking machine to mark a defect on the basis of the coordinate data.

### <Roll Map Generating Device>

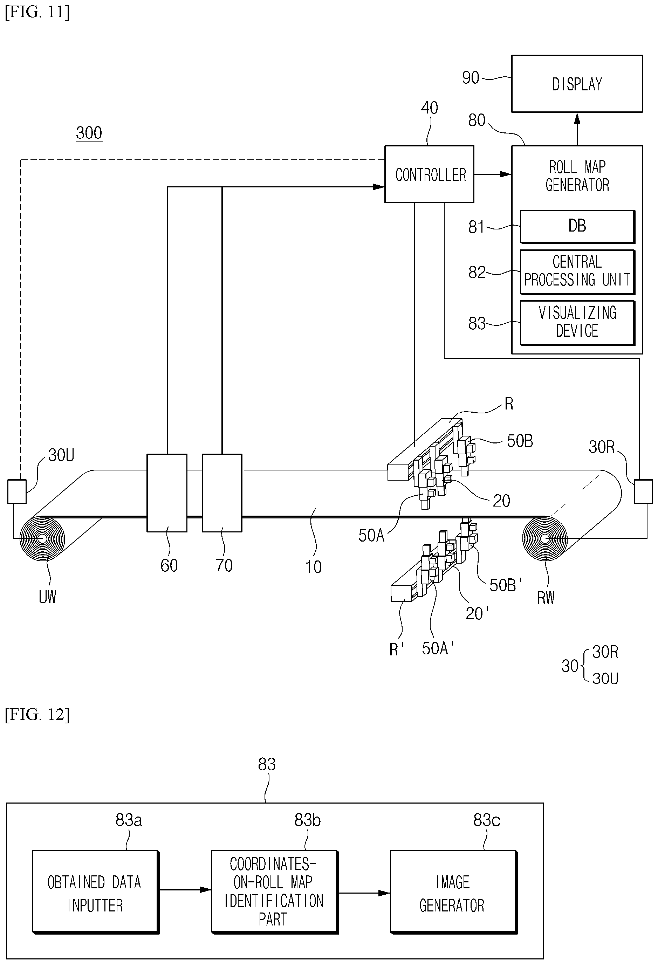

FIG. 11 is a schematic view of a roll map generation apparatus according to another aspect of the present invention. FIG. 12 is a schematic view of a data visualizing device included in a roll map generator. FIG. 13 is a schematic view of a roll map of a pattern electrode and a roll map of each reserved electrode lane part generated by a roll map generation apparatus of the present invention.

A roll map generation apparatus 300 of the present invention includes: a position measuring device 30 configured to obtain, as coordinate data, data about a position of a pattern electrode 10, in which coated portions 12 and uncoated portions 11' are repeatedly arranged in a longitudinal direction of the pattern electrode 10, in the longitudinal direction according to the amount of rotation of an unwinder UW or a rewinder RW when the pattern electrode 10 is moved in the roll-to-roll state between the unwinder UW and the rewinder RW, and represent the coordinate data in the form of pattern number unit data of the coated portions 12; a marking machine 20 configured to mark reference points M on the pattern electrode 10 in the longitudinal direction of the pattern electrode 10 at predetermined intervals in connection with the position measuring device 30; and a roll map generator 80 configured to obtain the coordinate data of the position of the pattern electrode 10 in the longitudinal direction, the pattern number unit data of the coated portions 12, and pattern number unit data of the reference points M in connection with the position measuring device 30 and the marking machine 20, and generates a roll map by displaying at least the pattern number unit data on a roll map that simulates an electrode moving in the roll-to-roll state.

The pattern electrode 10 includes a plurality of reserved electrode lane parts to be slit into a plurality of electrode lanes in the longitudinal direction of the pattern electrode 10 in a subsequent process. The marking machine 20 is a moving marking machine 20 which marks reference points on uncoated portions 11' of the reserved electrode lane parts arranged in a width direction of the pattern electrode 10 while moving in the width direction.

Because the pattern electrode 10 is moved by the rotation of the unwinder UW and the rewinder RW, the coordinates of the position of the pattern electrode 10 in the longitudinal direction may be specified according to the amount of rotation of the unwinder UW or the rewinder RW. As described above, the position measuring device 30 may represent the coordinates of the position of the electrode 10 in the longitudinal direction using the pattern number unit data of the coated portions. For example, a pattern number unit '0' obtained by the position measuring device 30 represents a front end of the pattern electrode 10, and when coordinates corresponding to a 1200^{th} pattern number are obtained from the pattern electrode 10 with 1200 pattern numbers, it should be understood that a rear end of the pattern electrode 10 is measured by the position measuring device.

As described above, the pattern number unit data of the pattern electrode 10 in the longitudinal direction may be detected by the rotary encoder 30U installed in the unwinder UW or a rotary encoder 30R installed in the rewinder RW.

The moving marking machine 20 employed in the reference point marking apparatuses 100 and 200 described above may be applied as the marking machine. In addition to the moving marking machine 20, a defect marking machine 50 that marks a defect on an uncoated portion 11 on one end of the pattern electrode 10 or another end thereof in the width direction may further be provided. As shown in FIG. 11, the defect marking machine 50 may be arranged in parallel with the moving marking machine 20 in the width direction of the electrode.

Because the moving marking machine 20 and the defect marking machine 50 may be connected with the position measuring device 30 directly or through the controller 40, reference points M may be marked at predetermined intervals in the longitudinal direction of the pattern electrode 10 and defects may be marked on the uncoated portions 11.

The present invention includes the roll map generator 80 that obtains, as coordinate data, data about the position of the pattern electrode 10 in the longitudinal direction and pattern number unit data of the reference points M in connection with the marking machines 20 and 50, and generates a roll map by displaying the coordinate data and the pattern number unit data on the roll map.

The roll map generator 80 may obtain pattern number unit data in the longitudinal direction of the pattern electrode 10 in connection with the position measuring device, and represent the positions of the reference points M and intervals therebetween in the form of pattern number unit data in connection with the moving marking machine 20. The pattern number unit data of the reference points M may be transmitted to the roll map generator 80 directly from the moving marking machine 20 or through the controller 40.

The roll map generator 80 may generate a roll map of the pattern electrode 10 and a roll map of each of the reserved electrode lane parts of the pattern electrode 10, based on the pattern number unit data of the reference points M marked by the moving marking machine 20.

The roll map generator 80 may generate a roll map that displays not only information about the reference points M but also information about defects. To this end, at least one of defect inspectors 60 and 70 that inspect the pattern electrode 10 to obtain inspection data about defects and obtain coordinate data and pattern number unit data about a defective point and/or a defective section at which the inspection data is obtained in connection with the position measuring device may be provided before the position of the defect marking machine 50. The types of the defect inspectors 60 and 70 have been described above and thus an additional description thereof will be omitted here.

As described above, the defect marking machine 50 may perform defect marking on a defect on an uncoated portion on one end of the pattern electrode 10 or uncoated portions 11 on both ends thereof in the width direction, based on the coordinate data and the pattern number unit data received from the defect inspectors 60 and 70. The roll map generator 80 may display coordinate data of the defect marking G, the pattern number unit data, and pattern number unit data of the reference points M on the roll map.

The roll map generator 80 may include a database 81 storing data obtained from the defect inspectors 60 and 70, the moving marking machine 20, the defect marking machine 50, and the position measuring device 30 or storing data about the quality, dimensions, etc. of normal electrodes. The roll map generator 80 may further include a central processing unit (CPU) 82 that processes obtained data and instructs a visualizing device 83 included in the roll map generator 80 to visualize the processed data.

The roll map generator 80 includes the visualizing device 83 for defining a visualization area on which a roll map that simulates the pattern electrode 10 is to be formed and displaying pattern number unit data on the defined visualization area. The visualizing device 83 may be connected to the CPU 82 and visualize and display inspection data and pattern number unit data according to an instruction from the CPU 82.

Referring to FIG. 12, the visualizing device 83 includes an obtained data inputter 83a, a coordinates (pattern number)-on-roll map identification part 83b, and an image generator 83c.

The obtained data inputter 83a receives data from the CPU 82.

The coordinates-on-roll map identification part 83b may define a visualization area on which a roll map is to be formed and define coordinates of pixels in the visualization area for each data element of obtained source data. In this case, when data about the specifications, e.g., a lot number, length, width, etc., of an electrode roll is input to the controller 40, a server or the like through registration of information about the electrode roll, the coordinates-on-roll map identification part 83b may calculate and determine the visualization area of the roll map from data about the size of the pattern electrode 10 according to a predetermined scale transformation scale. Alternatively, the visualization area of the roll map may be calculated and determined from location data of the pattern electrode 10 in the longitudinal direction and the width direction according to a predetermined scale transformation scale.

The coordinates-on-roll map identification part 83b may map obtained data about quality or defects and location data of the electrode 10 (in the width direction and the length direction), and allocate the mapped data on the visualization area (the roll map) according to the coordinates of the pixels.

The image generator 83c may express elements of the mapped data allocated to the coordinates of the pixels in the visualization area using at least one legend. The legend refers to various shapes such as circles, quadrangles, and triangles displayed in the visualization area or the shapes to which colors are assigned. Therefore, the image generator 83c visually displays various types of data related to quality or defects at the coordinates of pixels corresponding to pieces of location data of the actual pattern electrode 10 on the visualization area of the roll map using shapes, forms, and colors designated for various types of data, thereby generating a roll map of the present invention.

In addition, based on data stored in a storage such as the database 81, data corresponding to a specific range of the roll map may be retrieved from the storage and displayed on a screen (image generation) in association with the specific range. In this case, the CPU 82 may instruct the visualizing device 83 to visualize and display inspection data identified as abnormal in comparison with normal data stored in the database 81 to be distinguished from other data.

The setting of the size of the visualization area or the generation of an image by identifying the coordinates of the visualization area may be performed by various types of general user interfaces or various programs or processing tools related to data allocation, processing, analysis and visualization. Accordingly, the roll map generator 80 described above is only an example and thus is not limited by the above-described embodiments.

The roll map generator 80 may be, for example, a data processing system such as a manufacturing execution system (MES). A manufacturing process of the pattern electrode 10 employs an electrode MES for managing a series of electrode manufacturing processes such as coating, pressing, and slitting. Accordingly, when the coordinate data, the inspection data, and the like are transmitted to the electrode MES, the roll map described above may be generated by the electrode MES.

The roll map generation apparatus 300 of the present invention may display the generated roll map on a display 90 so that the reference points M and data about defects may be easily visually grasped at a glance.

The roll map generation apparatus 300 of the present invention may include a controller (PLC) that controls the movement of an electrode between the unwinder UW and the rewinder RW. In this case, the controller may be connected to the position measuring device 30 and the defect inspectors 60 and 70 to transmit pattern number unit data of the position of the electrode and the inspection data to the roll map generator 80. In this case, the controller 40 may process the inspection data and the pattern number unit data to be easily processed by the roll map generator 80. Because the controller (PLC) 40 is connected to the defect inspectors 60 and 70, the encoder or the like to control the roll-to-roll transfer of an electrode, it is more efficient to transmit data through the controller 40 in terms of data processing and management rather than directly transmit data from the defect inspectors 60 and 70, the encoder or the like to a data processing system such as the electrode MES.

FIG. 13 illustrates a roll map of a pattern electrode 10 generated by a roll map generation apparatus of the present invention.

FIG. 13 illustrates roll maps of a first reserved electrode lane part, a second reserved electrode lane part, and a twentieth reserved electrode lane part. Roll maps of a third reserved electrode lane part to a nineteenth reserved electrode lane part are omitted for convenience of illustration.

In the roll map, the positions of the reference points M are pushed backward in the longitudinal direction as the numbers of reserved electrode lane parts increase in the width direction.

Defective points or defective sections G are also displayed on the roll map by a defect inspector. As described above, the defect inspector transmits inspection data and pattern number unit data of a position at which the inspection data is obtained to the roll map generator 80 in connection with the position measuring device, and the roll map generator 80 visualizes and displays a defective point and/or a defective section at a position of a corresponding patter number on the roll map on the basis of the inspection data and the pattern number unit data.

As shown in FIG. 13, the roll map generator 80 of the present invention may display reference points M and pattern number unit data of defective points and/or defective sections on the roll maps. When needed, the roll map generator 80 may also display coordinate data (meter (m) information) in the longitudinal direction of the pattern electrode 10 on the roll map, in addition to the pattern number unit data. That is, according to the present invention, not only coordinate information but also pattern information may be used and displayed when the roll map is generated and thus are suitable for use in a pattern electrode process for small batteries.

Therefore, data related to the reference points M, electrode loss, quality or defects can be easily visually identified at a glance in the electrode process.

As described above, according to the present invention, reference points can be marked on a pattern electrode using a simple configuration, thereby greatly simplifying a marking process and reducing costs. The present invention is very suitable for a management mechanism of small pattern electrodes in which electrodes are managed in units of pattern numbers because reference points are marked on the uncoated portions 11' of the reserved electrode lane parts on the basis of the pattern number unit data. Because both reference points and defects can be marked, electrode defects can be easily detected.

Because a roll map can be generated using the reference point marking apparatus, it is very convenient to automatically perform quality control of electrodes. In addition, because a quality control history can be managed on the basis of the roll map, quality tracking can be easily performed when product abnormality occurs.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

### (Reference Numerals)

10: pattern electrode
11, 11': uncoated portion
12: coated portion
X: longitudinal direction
Y: width direction
M: reference point
M1, M1', M1", M‴: first reference point
M2, M2', M2": second reference point
M3, M3', M3": third reference point
20, 20': moving marking machine
30: position measuring device
R, R': guide shaft
40: controller
C: coater
D: electrode oven
50, 50': defect marking machine
50A, 50A': one-end marking machine
50B, 50B': other-end marking machine
60, 70: defect inspector
G: defect marking
100, 200: reference point marking apparatus
80: roll map generator
81: database
82: central processing unit
83: visualizing device
90: display
300: roll map generation apparatus

## Claims

1. A reference point marking apparatus for marking reference points on a pattern electrode in which coated portions and uncoated portions are repeatedly arranged in a longitudinal direction, wherein the pattern electrode comprises a plurality of reserved electrode lane parts to be slit into a plurality of electrode lanes in the longitudinal direction in a subsequent process, and
the reference point marking apparatus comprises:
a moving marking machine configured to mark reference points on uncoated portions of the plurality of reserved electrode lane parts arranged in a width direction of the pattern electrode while moving in the width direction; and
a controller configured to control an operation of the moving marking machine.

2. The reference point marking apparatus of claim 1, wherein the uncoated portions of the plurality of reserved electrode lane parts comprise portions to be slit in the width direction in a subsequent process, and
the reference points are marked on regions of the uncoated portions instead of the portions to be slit in the width direction.

3. The reference point marking apparatus of claim 1, wherein the moving marking machine marks reference points when the pattern electrode is moved in the longitudinal direction.

4. The reference point marking apparatus of claim 3, wherein, when the moving marking machine marks reference points on the uncoated portions of the plurality of reserved electrode lane parts while moving in the width direction, a marking path comprises a diagonal path inclined backward in the longitudinal direction due to a speed of movement of the pattern electrode in the longitudinal direction.

5. The reference point marking apparatus of claim 3, wherein the moving marking machine sequentially marks reference points on the uncoated portions of each of reserved electrode lane parts at positions pushed backward by one pattern in the longitudinal direction.

6. The reference point marking apparatus of claim 3, wherein the moving marking machine marks reference points on the uncoated portions of a plurality of uncoated portions at intervals of predetermined pattern numbers of the coated portions in the longitudinal direction.

7. The reference point marking apparatus of claim 1, wherein the pattern electrode comprises a double-sided electrode, an upper surface and a lower surface of which are coated with an electrode active material, and
the moving marking machine is installed on the upper surface and the lower surface of the pattern electrode.

8. The reference point marking apparatus of claim 1, further comprising a position measuring device configured to obtain, as coordinate data, data about a position of the pattern electrode in the longitudinal direction according to an amount of rotation of an unwinder or a rewinder when the pattern electrode is moved in a roll-to-roll state between the unwinder and the rewinder in the longitudinal direction, and represent the coordinate data in the form of pattern number unit data of the coated portions, and
wherein the controller controls the moving marking machine to mark reference points on the uncoated portions of the plurality of reserved electrode lane parts at intervals of predetermined pattern numbers of the coated portions, based on the pattern number unit data.

9. The reference point marking apparatus of claim 1, wherein the marked reference points comprise sequence information of the plurality of reserved electrode lane parts and pattern number units or pattern sequence information of the reference points in the longitudinal direction of the pattern electrode.

10. The reference point marking apparatus of claim 8, further comprising a defect marking machine configured to perform defect marking on an uncoated portion on one end of the pattern electrode or uncoated portions on both ends thereof in the width direction, the defect marking machine being disposed in parallel with the moving marking machine in the width direction of the pattern electrode.

11. The reference point marking apparatus of claim 10, further comprising a guide shaft disposed on the pattern electrode in the width direction, and
wherein the moving marking machine and the defect marking machine are coupled to the guide shaft, and
the moving marking machine is installed to be movable along the guide shaft.

12. The reference point marking apparatus of claim 10, further comprising at least one defect inspector configured to inspect the pattern electrode to obtain inspection data of defects and obtain coordinate data of the pattern electrode related to a defective point and/or a defective section at which the inspection data is obtained and pattern number unit data in connection with the position measuring device, the at least one defect inspector being provided before a position of the defect marking machine, and
wherein the defect marking machine performs defect marking on the uncoated portion on the one end of the pattern electrode or the uncoated portions on the both ends thereof in the width direction on the basis of the coordinate data and the pattern number unit data received from the at least one defect inspector.

13. The reference point marking apparatus of claim 12, wherein the controller calculates a point in time when a part of the pattern electrode corresponding to the defective point and/or the defective section reaches the at least one defect inspector, based on a distance between the at least one defect inspector and the defect marking machine and a speed of movement of the pattern electrode, and controls the defect marking machine to mark the defective point and/or the defective section at the point in time.

14. A roll map generation apparatus comprising:
a position measuring device configured to obtain, as coordinate data, data about a position of a pattern electrode in a longitudinal direction of the pattern electrode according to an amount of rotation of an unwinder or a rewinder when the pattern electrode is moved in a roll-to-roll state between the unwinder and the rewinder, and represent the coordinate data in the form of pattern number unit data of coated portions, wherein the coated portions and uncoated portions are repeatedly arranged on the pattern electrode in the longitudinal direction;
a marking machine configured to mark reference points on the pattern electrode at predetermined intervals in the longitudinal direction of the pattern electrode in connection with the position measuring device; and
a roll map generator configured to obtain the coordinate data related to the position of the pattern electrode in the longitudinal direction, the pattern number unit data of the coated portions, and pattern number unit data of the reference points in connection with the position measuring device and the marking machine, and generate a roll map by displaying at least the pattern number unit data on a roll map that simulates an electrode moving in the roll-to-roll state,
wherein the pattern electrode comprises a plurality of reserved electrode lane parts to be slit into a plurality of electrode lanes in the longitudinal direction of the pattern electrode in a subsequent process,
the marking machine comprises a moving marking machine configured to mark reference points on uncoated portions of the plurality of reserved electrode lane parts arranged in a width direction of the pattern electrode while moving in the width direction, and
the roll map generator generates a roll map of the pattern electrode and a roll map of each of the plurality of reserved electrode lane parts on the basis of the pattern number unit data marked by the moving marking machine.

15. The roll map generation apparatus of claim 14, further comprising:
a defect marking machine configured to perform defect marking on an uncoated portion on one end of the pattern electrode or uncoated portions on both ends thereof in the width direction, the defect marking machine being disposed in parallel with the moving marking machine in the width direction of the pattern electrode, and
at least one defect inspector configured to inspect the pattern electrode to obtain inspection data of defects and obtain coordinate data of the pattern electrode related to a defective point and/or a defective section at which the inspection data is obtained and pattern number unit data in connection with the position measuring device, the at least one defect inspector being provided before a position of the defect marking machine, and
wherein the defect marking machine performs defect marking on the uncoated portion on the one end of the pattern electrode or the uncoated portions on the both ends thereof in the width direction on the basis of the coordinate data and the pattern number unit data received from the defect inspector, and
the roll map generator displays both the reference point and defects on the roll map on the basis of the coordinate data and the pattern number unit data.

16. A pattern electrode in which coated portions and uncoated portions are repeatedly arranged in a longitudinal direction, wherein the pattern electrode comprises a plurality of reserved electrode lane parts in a width direction, and
reference points are marked on uncoated portions of the plurality of reserved electrode lane parts at intervals of predetermined pattern numbers.

17. The pattern electrode of claim 16, wherein the reference points comprise sequence information of the plurality of reserved electrode lane parts and pattern number units or pattern sequence information of the reference points in the longitudinal direction of the pattern electrode.

18. The pattern electrode of claim 16, wherein a defect marking part is provided on an uncoated portion on one end of the pattern electrode or uncoated portions on both ends thereof in the width direction.

19. A roll map which is a simulated electrode that simulates a pattern electrode in which coated portions and non-coated portions are repeatedly arranged in a longitudinal direction, the roll map comprises at least one of:
1) coordinate data about a position of the pattern electrode in the longitudinal direction;
2) pattern number data about the position of the pattern electrode in the longitudinal direction;
3) a plurality of reference points marked on uncoated portions between the coated portions at intervals of predetermined pattern numbers;
4) coordinate data and/or pattern number data of the reference points; and
5) a defect marking indicating defects of the pattern electrode or coordinate data and/or pattern number data of the defect marking.

20. The roll map of claim 19, wherein the pattern electrode comprises a plurality of reserved electrode lane parts in a width direction, and
the roll map of the pattern electrode comprises a roll map of each of the reserved electrode lane parts.
